# EUROPEAN PATENT APPLICATION

(11) **EP 4 509 226 A1**
(43) Date of publication of application: **19.02.2025**
(21) Application number: 23806537.9
(22) Date of filing: 15.02.2023
(51) Int. Cl.: B05C 11/02, B05C 21/00, H01M 10/04, H01M 4/04

(54) **MARKING DEVICE AND LAMINATE MANUFACTURING SYSTEM**

(30) Priority: 16.05.2022 CN 202221172219 U
(71) Applicant: Contemporary Amperex Technology Co., Limited, Ningde, Fujian 352100 (CN)
(72) Inventor: WANG, Jianlei, Ningde, Fujian 352100 (CN); WEI, Jingjing, Ningde, Fujian 352100 (CN); LIAO, Ruhu, Ningde, Fujian 352100 (CN); ZENG, Gang, Ningde, Fujian 352100 (CN); CAI, Quanshui, Ningde, Fujian 352100 (CN); DAI, Ya, Ningde, Fujian 352100 (CN); CHEN, Guangsheng, Ningde, Fujian 352100 (CN)
(74) Representative: Thoma, Michael
(86) International application number: PCT/CN2023/076202
(87) International publication number: WO 2023/221575

(57) **Abstract**

The present disclosure provides a marking device and a lamination manufacturing system, which relate to the field of the battery. The marking device includes an attachment mechanism, a coating mechanism, and a stripping mechanism, wherein the attachment mechanism is configured to attach shielding members to a marking area of a base material; the coating mechanism is arranged downstream of the attachment mechanism along a conveying direction of the base material, and the coating mechanism is configured to coat the base material; and the stripping mechanism is arranged downstream of the coating mechanism along the conveying direction, and the stripping mechanism is configured to detach the shielding members from the base material to form scores on the marking area. The marking device attaches the shielding members to the base material by the attachment mechanism, wherein the shielding member can shield the marking area, so as to prevent the coating mechanism from coating the paint to the marking area when coating the base material. After the coating mechanism is completed, the shielding member can be detached from the base material by the stripping mechanism to form the scores on the marking area. The device avoids the use of laser marking, which avoids forming a heat-affected zone on the coating layer, so that the electrode assembly manufactured by the electrode sheet after marking has a better performance.

## Description

### CROSS-REFERENCE TO RELATED APPLICATION

The present disclosure claims priority to Chinese patent Application No. 2022211722196, filed with the Chinese Patent Office on May 16, 2022, and entitled "MARKING DEVICE AND LAMINATION MANUFACTURING SYSTEM," the whole contents of which are incorporated herein by reference.

### TECHNICAL FIELD

The present disclosure relates to the field of battery, and specifically relates to a marking device and a lamination manufacturing system.

### BACKGROUND ART

The battery is widely applied in the field of new energy, such as electric vehicles and new energy vehicles, and the new energy vehicles and electric vehicles become a new trend in the development of the automobile industry. In the battery production process, it is needed to make scores on electrode sheets. However, the electrode assembly manufactured by the electrode sheet after marking in the prior art tends to have a poorer performance.

### SUMMARY

The object of embodiments of the present disclosure is to provide a marking device and a lamination manufacturing system, which are intended to solve the problem that the electrode assembly manufactured by the electrode sheet after marking in the prior art tends to have a poorer performance.

In a first aspect, the embodiments of the present disclosure provide a marking device, wherein the marking device includes an attachment mechanism, a coating mechanism, and a stripping mechanism, wherein the attachment mechanism is configured to attach shielding members to a marking area of a base material; the coating mechanism is arranged downstream of the attachment mechanism along a conveying direction of the base material, and the coating mechanism is configured to coat the base material; and the stripping mechanism is arranged downstream of the coating mechanism along a conveying direction, and the stripping mechanism is configured to detach the shielding member from the base material to form scores on the marking area.

In the above technical solution, the marking device attaches the shielding member to the base material by the attachment mechanism, and the shielding member can shield the marking area, so as to prevent the coating mechanism from coating paint to the marking area when coating the base material. After the coating mechanism is completed, the shielding member can be detached from the base material by the stripping mechanism to form the scores on the marking area. The marking device is adopted to avoid the use of laser marking, which avoids forming a heat-affected zone on the coating layer, so that the electrode assembly manufactured by the electrode sheet after marking has a better performance.

As an optional technical solution of the embodiments of the present disclosure, the attachment mechanism includes an unwinding mechanism, a posting member, and a first rewinding mechanism, wherein the unwinding mechanism is configured to unwind a material belt, the material belt includes a belt body and a plurality of shielding members, and the plurality of shielding members are arranged on the belt body at intervals; the posting member is configured to post the material belt on the base material, so that the shielding members are posted on the marking area; and the first rewinding mechanism is configured to rewind the belt body and separate the shielding members from the belt body.

In the above technical solution, the material belt includes the belt body and the plurality of shielding members. The plurality of shielding members are arranged on the belt body, so as to facilitate the unwinding of the material belt by the unwinding mechanism, and when the unwinding mechanism unwinds the material belt, the posting members can post the material belt to the base material. The first rewinding mechanism can rewind the belt body, so that the shielding members posted on the base material are separated from the belt body. In this way, the shielding member can be automatically posted to the marking area, which provides a higher posting efficiency and a higher automation degree.

As an optional technical solution of the embodiments of the present disclosure, the posting member is a posting roller, wherein the posting roller is configured to roll and press the material belt to the base material.

In the above technical solution, the posting roller rolls and presses the material belt to the base material, so that the shielding members can be posted on the base material. The belt body is easily separated from the shielding member under the action of the first rewinding mechanism due to lack of viscosity. The posting roller is configured to roll and press to realize the posting, wherein the posting has a higher stability, so that the shielding member can be smoothly posted to the base material, and the shielding member can be compacted on the base material, which avoids the shielding member from falling due to unsubstantial posting.

As an optional technical solution of the embodiments of the present disclosure, the attachment mechanism includes a driving mechanism, and the driving mechanism is connected to the posting roller, wherein the base material is attached to the posting roller to convey the base material.

In the above technical solution, the driving mechanism drives the posting roller to rotate, so that the posting roller can actively rotate to roll and press the material belt, thereby improving the effect of rolling and pressing (i.e., the posting effect). The base material is attached to the posting roller. In this way, when the posting roller rolls and presses the material belt to the base material, the posting roller can also drive the base material to move simultaneously to convey the base material.

As an optional technical solution of the embodiments of the present disclosure, the marking device includes two attaching mechanisms and two coating mechanisms, wherein the two attaching mechanisms are separately located on two sides of the base material in a thickness direction; and the two coating mechanisms are separately located on the two sides of the base material in the thickness direction.

In the above technical solution, each side of the base material in the thickness direction is provided with one attachment mechanism and one coating mechanism. In this way, two sides of the base material in the thickness direction can be attached with shielding members, and two sides of the base material in the thickness direction are coated by the coating mechanisms. After the shielding member is detached by the stripping mechanism, the scores are formed on two sides of the base material in the thickness direction.

As an optional technical solution of the embodiments of the present disclosure, two attachment mechanisms are arranged oppositely along the thickness direction.

In the above technical solution, two attachment mechanisms are arranged oppositely. The two attachment mechanisms can be configured as supporting members for each other to support the base material when attaching the shielding member, so that it does not need to additionally provide a supporting member to support the base material to assist the attachment mechanism in attaching the shielding member, which reduces the cost of the marking device at the same time when ensuring the attachment quality.

As an optional technical solution of the embodiments of the present disclosure, two attachment mechanisms are staggered along the thickness direction.

In the above technical solution, the two attachment mechanisms are staggered to make full use of space.

As an optional technical solution of the embodiments of the present disclosure, the marking device further includes supporting members, wherein the supporting members and the attachment mechanisms are in one-to-one correspondence; the supporting members and the attachment mechanisms are arranged oppositely on two sides of the base material along the thickness direction of the base material; and the supporting members are configured to support the base material.

In the above technical solution, the supporting member is provided to assist in supporting the base material, which facilitates the attachment of the shielding members by the attachment mechanism to the base material supported by the supporting member, and ensures that the shielding member is attached to the base material stably and reliably.

As an optional technical solution of the embodiments of the present disclosure, the shielding members are provided with an adhesive layer, and the attachment mechanisms are configured to attach the shielding members to the marking area of the base material.

In the above technical solution, the shielding members are provided with the adhesive layer, so that the shielding member is more firmly attached to the base material, which prevents the shielding member detaches from the base material during coating.

As an optional technical embodiment of the embodiments of the present disclosure, the material belt includes a connector, wherein the connector connects the plurality of shielding members; and the stripping mechanism includes a second rewinding mechanism, wherein the second rewinding mechanism is configured to rewind the connector, so that the shielding members are detached from the base material.

In the above technical solution, the plurality of shielding members are connected by providing the connector, and the plurality of shielding members can be detached from the base material through that the second rewinding mechanism rewinds the connector, so that the efficiency of detaching the shielding members is higher and the cost is low.

As an optional technical embodiment of the embodiments of the present disclosure, the posting member is configured to post the connector on at least one side of the base material in a width direction.

In the above technical solution, the connector is posted on at least one side of the base material in the width direction by the posting member. The connector also plays a role of shielding, so that the coating mechanism will not coat the paint on the area posted by the connector when coating the base material, which can reserve an tab reservation area on at least one side of the base material in the width direction, so as to form tabs on the base material.

As an optional technical solution of the embodiments of the present disclosure, the marking device includes a roller pressing mechanism, wherein the roller pressing mechanism is arranged downstream of the coating mechanism along the conveying direction, and the roller pressing mechanism is configured to roll and press the base material.

In the above technical solution, the roller pressing mechanism is provided, which is convenient for compacting the paint coated on the base material.

As an optional technical solution the embodiments of the present disclosure, the roller pressing mechanism is arranged upstream of the stripping mechanism.

In the above technical solution, the roller pressing mechanism is arranged upstream of the stripping mechanism, so that the shielding member is detached by the stripping mechanism after the roller pressing mechanism compacts the paint; and because the coating is compacted, it can avoid the stripping mechanism rubbing the paint away from the base material when detaching the shielding member. Additionally, the paint is rolled and pressed before detaching the shielding member, since the shielding member still occupies the marking area, which can prevent the paint from rolling and pressing into the marking area.

In a second aspect, the embodiments of the present disclosure further provide a lamination manufacturing system, wherein the lamination manufacturing system includes the marking device as described above.

### BRIEF DESCRIPTION OF DRAWINGS

In order to more clearly illustrate the technical solutions of the embodiments of the present disclosure, the drawings to be used in the embodiments will be briefly introduced below. It should be understood that the following drawings only show certain embodiments of the present disclosure, and therefore should not be regarded as a limitation of the scope. For persons of ordinary skill in the art, other relevant drawings can be obtained from these drawings without inventive efforts.
FIG. 1 shows a schematic structure diagram of a marking device provided by some embodiments of the present disclosure;
FIG. 2 shows a schematic structure diagram of a material belt provided by some embodiments of the present disclosure;
FIG. 3 shows a schematic structure diagram of a marking device (including two attachment mechanisms) provided by some embodiments of the present disclosure;
FIG. 4 shows a schematic structure diagram of a marking device (including two attachment mechanisms) provided by some other embodiments of the present disclosure;
FIG. 5 shows a schematic structure diagram of shielding members detached by a stripping mechanism provided by some embodiments of the present disclosure; and
FIG. 6 shows a schematic structure diagram of a marking device (including roller pressing mechanisms) provided by some embodiments of the present disclosure.

Reference numbers: 10-marking device; 100-attachment mechanism; 110-unwinding mechanism; 120-posting member; 130-first rewinding mechanism; 200-coating mechanism; 210-coating head; 300-stripping mechanism; 310-second rewinding mechanism; 400-supporting member; 500-roller pressing mechanism; 510-pressing roller; 600-base material; 700-material belt; 710-shielding member; 720-belt body; 730-connector.

### DETAILED DESCRIPTION OF EMBODIMENTS

The embodiments of the technical solutions of the present disclosure will be described below in detail in conjunction with drawings. The following embodiments are only intended to more clearly illustrate the technical solutions of the present disclosure, and therefore are only intended as examples, and are not to limit the scope of protection of the present disclosure in this way.

Unless otherwise defined, all technical and scientific terms used in the text have the same meaning as commonly understood by those skilled in the art belonging to the present disclosure. The terms used in the text are used only for the purpose of describing specific embodiments, and are not intended to limit the present disclosure. The terms "include" and "comprise" and any variations thereof in the specification and claims and foregoing description of drawings of the present disclosure, are intended to cover a non-exclusive inclusion.

In the description of the embodiments of the present disclosure, the technical terms "first", "second", etc., are only used to distinguish different objects, and are not to be understood as indicating or implying relative importance or implicitly specifying a quantity, particular order, or primary and secondary relationship of the technical features indicated. In the description of embodiments of the present disclosure, "plurality" means more than two, unless otherwise expressly and specifically limited.

Reference to "embodiment" in the text means that particular features, structures, or characteristics described in conjunction with the embodiments can be included in at least one embodiment of the present disclosure. The phrase occurring at various positions in the specification does not necessarily all refer to the same embodiment, nor is it a separate or alternative embodiment that is mutually exclusive with other embodiments. It is explicitly and implicitly understood by those skilled in the art that the embodiments described in the text can be combined with other embodiments.

The term "and/or" in description of the embodiments of the present disclosure is merely an associated relationship for describing associated objects, which indicates three relationships can exist, e.g., A and/or B can indicate three cases: A alone, both A and B, and B alone. Additionally, the character "/" in the text generally indicates an "or" relationship of the associated objects.

In the description of embodiments of the present disclosure, the term "plurality" refers to more than two (including two). Similarly, "the plurality of groups" refers to more than two groups (including two groups), and "the plurality of plates" refers to more than two plates (including two plates).

In the description of embodiments of the present disclosure, orientations or positional relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential", etc., are the orientations or positional relationships based on that shown in the drawings, which are used only to facilitate the description of the present disclosure and simplify the description, and are not to indicate or imply that the device or element referred to must have particular orientations, or be constructed and operated in the particular orientations, and therefore cannot be understood as a limitation of the present disclosure.

In the description of the embodiments of the present disclosure, unless otherwise expressly regulated and limited, the technical terms "mount", "connect", "link", and "fix", etc., are to be understood in a broad sense, e.g., it can be a fixed connection, a detachable connection, or an integral connection; it can be a mechanical connection, or an electrical connection; it can be a direct connection, or an indirect connection by an intermediate medium; and it can also be a communication inside two elements, or an interaction between the two elements. For those of ordinary skill in the art, the specific meaning of the above terms in the embodiments of the present disclosure can be understood on specific situations.

At present, from the perspective of the development of the market situation, the application of the battery is more and more extensive. The battery is not only applied in energy storage power systems, such as hydro, fire, wind, and solar power station, but also widely applied in electric transportations, such as electric bicycle, electric motorcycle, and electric car, and also applied in military equipment, aerospace, and other fields. With the continuous expansion of application fields of the battery, the market demands also continuously expand.

In the battery production process, it is necessary to make scores on electrode sheets. However, the electrode assembly manufactured by the electrode sheet after marking in the prior art tends to have a poorer performance.

The inventor found in the study that the method of marking the electrode sheet in the prior art is to form a score that exposes a base material but does not damage the base material by high temperature ablation, generated by the high concentration of light beam of the laser light, for an active substance layer of one side (or positive and negative sides) of the electrode sheet. However, when the laser ablates the active substance layer, a heat-affected zone will be generated under the action of the high temperature. The heat-affected zone will affect the performance of the active substance layer on two sides of the score, and ultimately will affect the performance of the electrode assembly.

Based on the above considerations, the inventor designed a marking device after in-depth research. The marking device includes an attachment mechanism, a coating mechanism, and a stripping mechanism, wherein the attachment mechanism is configured to attach a shielding member to a marking area of a base material; the coating mechanism is arranged downstream of the attachment mechanism along a conveying direction of the base material, and the coating mechanism is configured to coat the base material; and the stripping mechanism is arranged downstream of the coating mechanism along the conveying direction, and the stripping mechanism is configured to detach the shielding member from the base material to form the score on the marking area.

The marking device attaches the shielding member to the base material by the attachment mechanism, wherein the shielding member can shield the marking area, so as to prevent the coating mechanism from coating the paint into the marking area when coating the base material. After the coating mechanism is completed, the shielding member can be detached from the base material by the stripping mechanism to form the score on the marking area. The marking device is adopted to avoid the use of laser marking, which avoids forming a heat-affected zone on the coating layer, so that the electrode assembly manufactured by the electrode sheet after marking has a better performance.

The marking device disclosed by the embodiments of the present disclosure is suitable for marking on electrode sheets, wherein the electrode sheets are configured to laminate and manufacture an electrode assembly, which in turn can be made into the battery. It is to be noted that the marking device disclosed by the embodiments of the present disclosure is also suitable for the making of other workpieces to be coated and manufactured.

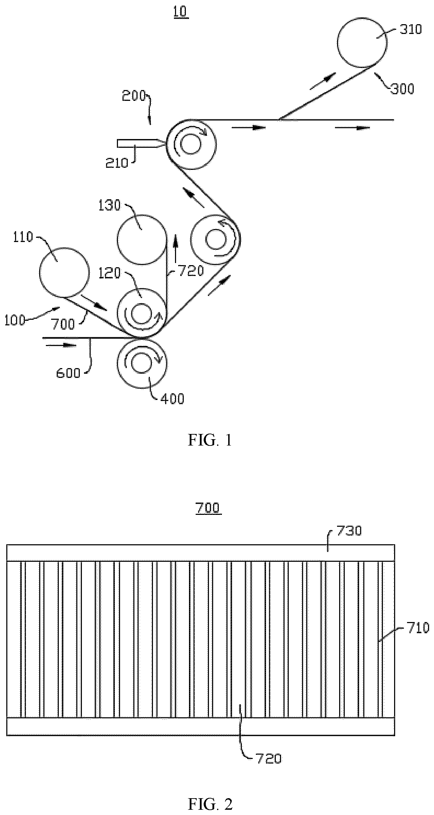

Referring to FIG. 1 and in conjunction with FIG. 2, FIG. 1 shows a schematic structure diagram of the marking device 10 provided by some embodiment of the present disclosure, and FIG. 2 shows a schematic structure diagram of a material belt 700 provided by some embodiments of the present disclosure. The embodiments of the present disclosure provide a marking device 10. The marking device 10 includes an attachment mechanism 100, a coating mechanism 200, and a stripping mechanism 300, wherein the attachment mechanism 100 is configured to attach a shielding member 710 to a marking area of a base material 600; the coating mechanism 200 is arranged downstream of the attachment mechanism 100 along a conveying direction of the base material 600, and the coating mechanism 200 is configured to coat the base material 600; and the stripping mechanism 300 is arranged downstream of the coating mechanism 200 along the conveying direction, and the stripping mechanism 300 is configured to detach the shielding member 710 from the base material 600 to form the score on the marking area.

The attachment mechanism 100 is configured to attach the shielding member 710 to the marking area, wherein the marking area is an area on the base material 600 where the score needs to be made, and "attach" means that the shielding member 710 shields or covers the marking area, wherein the shielding member 710 herein can be connected to the marking area, e.g., the shielding member 710 adheres to the marking area, or the shielding member 710 may not be connected to the marking area, e.g., the shielding member 710 just abuts against the marking area.

The shielding member 710 is a component for shielding the marking area, wherein the shielding member 710 can shield the marking area to prevent the coating mechanism 200 from coating the paint into the marking area when coating.

The coating mechanism 200 is a mechanism for coating the paint to the base material 600, e.g., when the marking device 10 is configured to mark the electrode sheet, the coating is an active substance. The coating mechanism 200 coats the active substance to the base material 600, so that an active substance layer is formed on the base material 600, e.g., the coating mechanism 200 can include a coating head 210, and the coating head 210 is configured to coat the base material 600. Optionally, the marking device 10 includes a roller, wherein the coating head 210 and the roller are located on two sides of the base material 600 in the thickness direction; the base material 600 is provided with a wrapping area wrapping around the roller; and the coating head 210 is configured to coat a surface of the wrapping area away from the roller.

The stripping mechanism 300 is configured to detach the shielding member 710 from the base material 600. After the stripping mechanism 300 detaches the shielding member 710 from the base material 600, the score is formed on the marking area due to uncoated the paint.

The attachment mechanism 100, the coating mechanism 200, and the stripping mechanism 300 are arranged in sequence along the conveying direction of the base material 600, so as to first attach the shielding member 710 to the base material 600, then coat the base material 600, and finally detach the shielding member 710 from the base material 600.

The marking device 10 attaches the shielding member 710 to the base material 600 by the attachment mechanism 100, wherein the shielding member 710 can shield the marking area, so as to prevent the coating mechanism 200 from coating the paint to the marking area when coating the base material 600. After the coating mechanism 200 is completed, the shielding member 710 can be detached from the base material 600 by the stripping mechanism 300 to form the score on the marking area. The marking device 10 is adopted to avoid the use of laser marking, which avoids forming a heat-affected zone on the coating layer, so that the electrode assembly manufactured by the electrode sheet after marking has a better performance.

It is to be noted that the shape and size of the score can be determined based on the shape and size of the marking area shielded by the shielding member 710, that is, the different shapes and sizes of the score can be obtained by replacing different shapes and sizes of the shielding member 710.

Referring to FIG. 1 and in conjunction with FIG. 2, in some embodiments, the attachment mechanism 100 includes an unwinding mechanism 110, a posting member 120, and a first rewinding mechanism 130. The unwinding mechanism 110 is configured to unwind the material belt 700. The material belt 700 includes a belt body 720 and a plurality of shielding members 710, and the plurality of shielding members 710 are arranged on the belt body 720 at intervals. The posting member 120 is configured to post the material belt 700 on the base material 600, so that the shielding member 710 is posted on the marking area. The first rewinding mechanism 130 is configured to rewind the belt body 720 and separate the shielding member 710 from the belt body 720.

The unwinding mechanism 110 is configured to unwind the material belt 700. For example, the unwinding mechanism 110 includes an unwinding roller and the material belt 700 is wrapped around the unwinding roller, and the unwinding roller unwinds the material belt 700 wrapped thereon when the unwinding roller rotates.

The scores of the electrode sheet needed to be made generally extend along the electrode sheet in a width direction, and a plurality of scores are arranged at intervals along the electrode sheet in a length direction. Correspondingly, the material belt 700 includes the belt body 720 and the plurality of shielding members 710 arranged on the belt body 720 at intervals, wherein the belt body 720 can fix provisionally the shielding members 710 thereon on the one hand, and on the other hand, the belt body 720 is convenient for winding and unwinding. When the material belt 700 is posted on the base material 600, the plurality of shielding members 710 arranged on the base material 720 at intervals are posted on a plurality of marking areas arranged at intervals.

The posting member 120 is configured to post the material belt 700 on the base material 600. When the material belt 700 is posted on the base material 600, the shielding member 710 is posted on the marking area, and the belt body 720 may or may not be posted on the base material 600. In order to facilitate the first rewinding mechanism 130 to rewind the belt body 720, the belt body 720 is not posted on the base material 600 in the embodiment.

The first rewinding mechanism 130 is configured to rewind the belt body 720. For example, the first rewinding mechanism 130 includes a first rewinding roller and the belt body 720 is wrapped around the first rewinding roller, and the first rewinding roller rewinds the belt body 720 wrapped thereon when the first rewinding roller rotates. When the first rewinding mechanism 130 rewinds the belt body 720, the belt body 720 can be separated from the shielding member 710 due to a smaller connection force between the shielding member 710 and the belt body 720 since the shielding member 710 is posted on the base material 600. The belt body 720 is recovered by the first rewinding mechanism 130, and the shielding member 710 remains posted on the base material 600.

The material belt 700 includes the belt body 720 and the plurality of shielding members 710. The plurality of shielding members 710 are arranged on the belt body 720, so that the material belt 700 can be unwound conveniently by the unwinding mechanism 110. The posting member 120 can post the material belt 700 on the base material 600 when the unwinding mechanism 110 unwinds the material belt 700. The first rewinding mechanism 130 can rewind the belt body 720, so that the shielding member 710 posted on the base material 600 is separated from the belt body 720. In this way, the shielding members 710 can be automatically posted to the marking area, which provides a higher posting efficiency and a higher automation degree.

In some embodiments, the posting member 120 is a posting roller, and the posting roller is configured to roll and press the material belt 700 to the base material 600.

The posting roller is of a roller structure. The material belt 700 is located between the base material 600 and the posting roller, wherein the posting roller can roll and press the material belt 700 to the base material 600, so as to post the shielding member 710 to the base material 600.

The material belt 700 is rolled and pressed to the base material 600 by the posting roller, so that the shielding member 710 can be posted on the base material 600, and the belt body 720 is easily separated from the shielding member 710 under the action of the first rewinding mechanism 130 due to lack of viscosity. The posting roller is adopted to roll and press to realize the posting, which provides a higher posting stability. In this way, the shielding member 710 can be flatly posted on the base material 600, and the shielding member 710 can be pressed tightly to the base material 600, which avoids the shielding member 710 from falling due to poor posting.

In some other embodiments, the posting member 120 is a posting plate, and the posting roller is configured to press the material belt 700 to the base material 600.

The posting plate is of a plate structure. The material belt 700 is located between the base material 600 and the posting plate, wherein the posting plate can press the material belt 700 to the base material 600, so as to post the shielding member 710 on the base material 600.

The material belt 700 is pressed to the base material 600 by the posting plate, so that the shielding member 710 can be posted on the base material 600, and the belt body 720 is easily separated from the shielding member 710 under the action of the first rewinding mechanism 130 due to lack of the viscosity. The posting plate is adopted to press to realize the posting, which provides the higher posting stability. In this way, the shielding member 710 can be flatly posted on the base material 600, and the shielding member 710 can be pressed tightly to the base material 600, which avoids the shielding member 710 from falling due to poor posting.

In some embodiments, the attachment mechanism 100 includes a driving mechanism, wherein the driving mechanism is connected to the posting roller, and the base material 600 is attached to the posting roller to convey the base material 600.

The driving mechanism is configured to drive the posting roller to rotate. For example, the driving mechanism can be a motor, or, of course, can also be an internal combustion engine. For example, the driving mechanism can be a linear driving member and a transmission mechanism, wherein the transmission mechanism connects the linear driving member and the posting roller. The linear driving member outputs a linear motion; and the transmission mechanism converts the linear motion output by the linear drive member to a rotational motion and drives the posting roller to rotate.

The attachment of the base material 600 to the posting roller includes both a surface contact method that the base material 600 is wrapped around the posting roller and a line contact method that the base material 600 is tangent to the posting roller.

The posting roller is driven to rotate by the driving mechanism, so that the posting roller can actively rotate to roll and press the material belt 700, which improves the effect of rolling and pressing (posting effect). The base material 600 is attached to the posting roller. In this way, when the material belt 700 is rolled and pressed to the base material 600 by the posting roller, the posting roller can also drive the base material 600 to move simultaneously, so as to convey the base material 600.

In some other embodiments, the attachment mechanism 100 includes an attachment manipulator, wherein the attachment manipulator is configured to attach the shielding member 710 to the marking area of the base material 600.

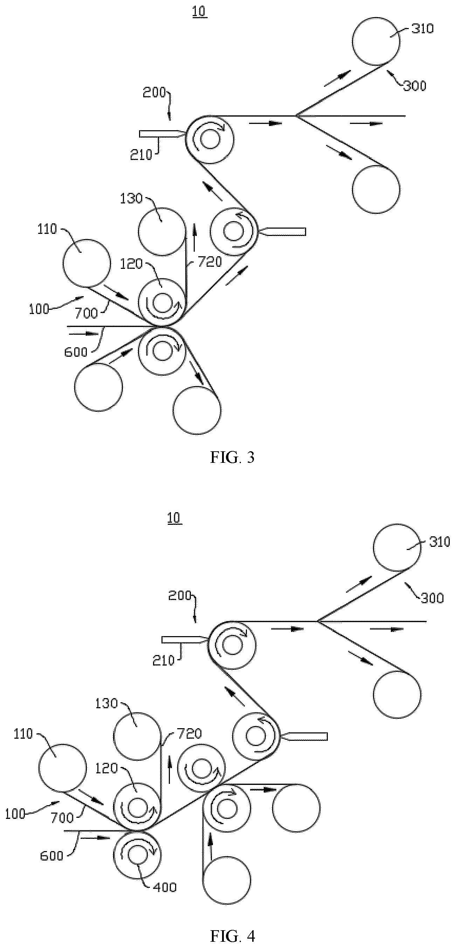

Referring to FIG. 3, FIG. 3 shows a schematic structure diagram of the marking device 10 (including two attachment mechanisms 100) provided by some embodiments of the present disclosure. In some embodiments, the marking device 10 includes two attachment mechanisms 100 and two coating mechanisms 200, wherein the two attachment mechanisms 100 are located on two sides of the base material 600 in the thickness direction respectively, and the two coating mechanisms 200 are located on two sides in the thickness direction respectively.

The two attachment mechanisms 100 are configured to separately attach the shielding members 710 to two sides of the base material 600 in the thickness direction, and the two coating mechanisms 200 are configured to separately coat two sides of the base material 600 in the thickness direction.

One attachment mechanism 100 and one coating mechanism 200 are arranged on each side of the base material 600 in the thickness direction. In this way, the shielding members 710 can be respectively attached to two sides of the base material 600 in the thickness direction, and the coating mechanism 200 can coat the both sides of the base material 600 in the thickness direction. After the shielding members 710 are detached by the stripping mechanism 300, the scores are formed on the both sides of the base material 600 in the thickness direction.

Referring to FIG. 3, in some embodiments, two attachment mechanisms 100 are arranged oppositely along the thickness direction.

The "two attachment mechanisms 100 are arranged oppositely" mainly means that posting members 120 of the two attachment mechanisms 100 are arranged oppositely. The two posting members 120 are arranged oppositely, which means that two posting members 120 are located at the same position of the base material 600 in the conveying direction, and are separately located on two sides of the base material 600 in the thickness direction. When a first posting member 120 posts on one side of the base material 600 in the thickness direction, the second posting member 120 can be configured as a supporting member for supporting the base material 600, so as to improve the quality of the shielding member 710 posted by the first posting member 120. Meanwhile, the second posting member 120 posts on the other side of the base material 600 in the thickness direction, and the first posting member 120 can be configured as the supporting member for supporting the base material 600, so as to improve the quality of the shielding member 710 posted by the second posting member 120. That is to say, two posting members 120 can be supporting members for each other, wherein one posting member assists the other posting member 120 in posting the shielding member 710.

The two attachment mechanisms 100 are arranged oppositely, so that two attachment mechanisms 100 can be configured as supporting members for each other to support the base material 600 when attaching the shielding member 710, which does not need to additionally provide a supporting member to support the base material 600 to assist the attachment mechanism 100 in attaching the shielding member 710, which reduces the cost of the marking device 10 while ensuring the attachment quality.

Referring to FIG. 4, FIG. 4 shows a schematic structure diagram of the marking device 10 (including two attachment mechanisms 100) provided by some other embodiments of the present disclosure. In some other embodiments, two attachment mechanisms 100 are staggered along the thickness direction.

The "two attachment mechanisms 100 are staggered" means that two attachment mechanisms 100 are located at different positions on the base material 600 in the conveying direction (it can also be understood that two attachment mechanisms 100 have an upstream-downstream relationship in the conveying direction), and are located at two sides of the base material 600 in the thickness direction respectively.

The two attachment mechanisms 100 are staggered to make full use of the space.

Referring to FIG. 4, in some embodiments, the marking device 10 further includes a supporting member 400, wherein the supporting member 400 and the attachment mechanism 100 are in one-to-one correspondence. The supporting member 400 and the attachment mechanism 100 are arranged on two sides of the base material 600 along the thickness direction of the base material 600, and the supporting member 400 is configured to support the base material 600.

The supporting member 400 is configured to support the base material 600. When the shielding member 710 is attached to the marking area by the attachment mechanism 100, the supporting member 400 supports the base material 600 to ensure the attachment quality of the attachment mechanism 100 to the shielding member 710. For example, the supporting member 400 is a supporting roller, and the supporting roller is arranged opposite to the posting roller. When the shielding member 710 is posted on the base material 600 by the posting roller, the supporting member 400 can support the base material 600 to ensure that the shielding member 710 is stably posted on the marking area by the posting roller. For another example, the supporting member 400 is a supporting platform, and the support platform is arranged opposite to the posting roller.

The supporting member 400 is provided to assist in supporting the base material 600, which facilitates the attachment of the shielding member 710 by the attachment mechanism 100 to the base material 600 supported by the supporting member 400, and ensures that the shielding member 710 is attached to the base material 600 stably and reliably.

In some embodiments, the shielding member 710 is provided with an adhesive layer, and the attachment mechanism 100 is configured to adhere the shielding member 710 to the marking area of the base material 600.

The "shielding member 710 is provided with an adhesive layer" can also be understood to mean that the shielding member 710 has viscosity. For example, the shielding member 710 can be an adhesive belt, wherein the adhesive belt can be either single-sided or double-sided.

The shielding member 710 is provided with the adhesive layer, so that the shielding member 710 is more firmly connected to the base material 600, so as to prevent the shielding member 710 detaching from the base material 600 during coating.

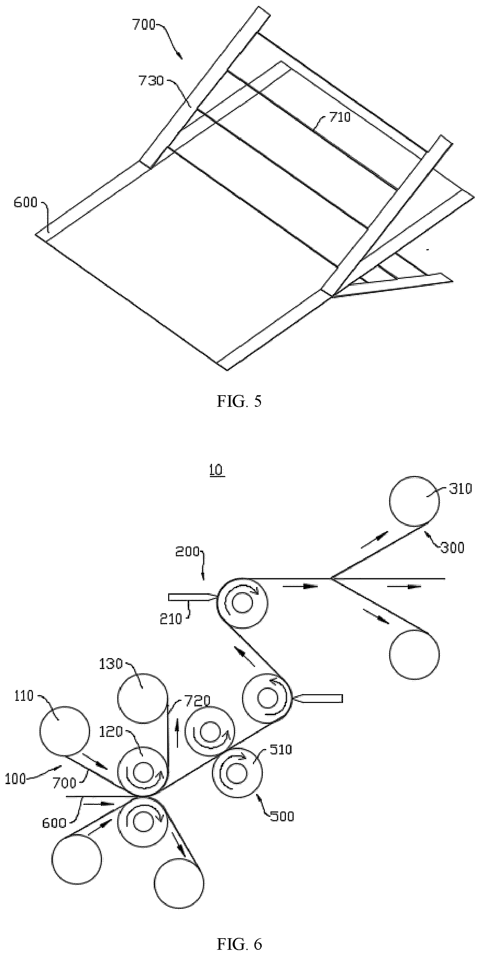

Referring to FIG. 5, FIG. 5 shows a schematic structure diagram of the shielding members 710 detached by the stripping mechanism 300 provided by some embodiments of the present disclosure. The material belt 700 includes a connector 730, wherein the connector 730 connects the plurality of shielding members 710. The stripping mechanism 300 includes a second rewinding mechanism 310, wherein the second rewinding mechanism is 310 configured to rewind the connector 730, so that shielding member 710 is detached from the base material 600.

The connector 730 is configured to connect the plurality of shielding members 710 and the second rewinding mechanism 310 is configured to rewind the connector 730. For example, the second rewinding mechanism 310 includes a second rewinding roller and the connector 730 is wrapped around the second rewinding roller, and the second rewinding roller rewinds the connector 730 wrapped thereon when the second rewinding roller rotates.

The plurality of shielding members 710 are connected to the connector 730, and the plurality of shielding members 710 can be detached from the base material 600 through that the second rewinding mechanism 310 rewinds the connector 730, so that the efficiency of detaching the shielding members 710 is higher and the cost is low.

In some other embodiments, the stripping mechanism 300 includes a stripping manipulator, wherein the stripping manipulator is configured to detach the shielding member 710 from the marking area.

Referring to FIG. 5, in some embodiments, the posting member 120 is configured to post the connector 730 on at least one side of the base material 600 in the width direction.

One connector 730 can be provided, and one connector 730 connects one ends of the plurality of shielding members 710. When one connector 730 is provided, the connector 730 can be posted on one side of the base material 600 in the width direction. Two connectors 730 can also be provided, wherein the two connectors 730 connect the plurality of shielding members 710, and the two connectors 730 are located at two ends of the shielding members 710. In this way, the two connectors 730 can be posted on two sides of the base material 600 in the width direction.

The connector 730 is posted on at least one side of the base material 600 in the width direction by the posting member 120. The connector 730 also plays a role of shielding, so that the coating mechanism 200 will not coat the paint on the area posted by the connector 730 when coating the base material 600, which can reserve a tab reservation area on at least one side of the base material 600 in the width direction, so as to form tabs on the base material 600. Additionally, the method of posting the connector 730 on at least one side of the base material 600 in the width direction also does not affect the coating process, which is beneficial for ensuring the coating quality.

Referring to FIG. 6, FIG. 6 shows a schematic structure diagram of the marking device 10 (including attachment mechanisms 500) provided by some embodiments of the present disclosure. In some embodiments, the marking device 10 includes the roller pressing mechanism 500, wherein the roller pressing mechanism 500 is arranged downstream of the coating mechanism 200 along conveying direction, and the roller pressing mechanism 500 is configured to roll and press the base material 600.

The roller pressing mechanism 500 is configured to roll and press the base material 600. The roller pressing mechanism 500 is arranged downstream of the coating mechanism 200, so as to compact the paint coated on the base material 600 by the coating mechanism 200. For example, the roller pressing mechanism 500 includes two pressing rollers 510, wherein the two pressing rollers 510 are arranged oppositely on the base material 600 in the thickness direction, and the two pressing rollers 510 cooperate to roll and press the base material 600.

The roller pressing mechanism 500 is provided, which is convenient for compacting the paint coated on the base material 600 and improving the performance of the electrode sheet.

In some embodiments, the roller pressing mechanism 500 is arranged upstream of the stripping mechanism 300. The roller pressing mechanism is 500 arranged upstream 300 of the stripping mechanism, so that the shielding member 710 is detached by the stripping mechanism 300 after the roller pressing mechanism 500 compacts the paint. Since the coating is compacted, it can avoid the stripping mechanism 300 from rubbing the paint away from the base material 600 when detaching the shielding member 710. Additionally, the paint is rolled and pressed before detaching the shielding member 710. Since the shielding member 710 still occupies the marking area, it can prevent the paint from rolling and pressing into the marking area.

The embodiments of the present disclosure further provide a lamination manufacturing system, wherein the lamination manufacturing system includes the marking device 10 as described above.

According to some embodiments of the present disclosure, referring to FIG. 1 to FIG. 5,

the embodiments of the present disclosure provide a marking device 10, wherein the marking device 10 includes the attachment mechanism 100, the coating mechanism 200, and the stripping mechanism 300, wherein the attachment mechanism 100 is configured to attach the shielding member 710 to the marking area of the base material 600; the coating mechanism 200 is arranged downstream of the attachment mechanism 100 along the conveying direction of the base material 600, and the coating mechanism 200 is configured to coat the base material 600; and the stripping mechanism 300 is arranged downstream of the coating mechanism 200 along the conveying direction, and the stripping mechanism 300 is configured to detach the shielding member 710 from the base material 600 to form the score on the marking area. The attachment mechanism 100 includes the unwinding mechanism 110, the posting member 120, and the first rewinding mechanism 130, wherein the unwinding mechanism 110 is configured to unwind the material belt 700, the material belt 700 includes the belt body 720 and the plurality of shielding members 710, and the plurality of shielding members 710 are arranged on the belt body 720 at intervals; the posting member 120 is configured to post the material belt 700 on the base material 600, so that the shielding member 710 is posted on the marking area; and the first rewinding mechanism 130 is configured to rewind the belt body 720 and separate the shielding member 710 from the belt body 720. The material belt 700 includes the connector 730, wherein the connector 730 connects the plurality of shielding members 710. The stripping mechanism 300 includes the second rewinding mechanism 310, wherein the second rewinding mechanism 310 is configured to rewind the connector 730, so that shielding member 710 is detached from the base material 600. The marking device 10 includes the roller pressing mechanism 500, wherein the roller pressing mechanism 500 is arranged downstream of the coating mechanism 200 and upstream of the stripping mechanism 300 along the conveying direction, and the roller pressing mechanism 500 is configured to roll and press the base material 600.

The marking device 10 attaches the shielding member 710 on the base material 600 by the attachment mechanism 100, wherein the shielding member 710 can shield the marking area, so as to prevent the coating mechanism 200 from coating the paint on the marking area when coating the base material 600. After the coating mechanism 200 is completed, the shielding member 710 can be detached from the base material 600 by the stripping mechanism 300 to form the score on the marking area. The marking device 10 is adopted to avoid the use of laser marking, which avoids forming the heat-affected zone on the coating layer, so that the electrode assembly manufactured by the electrode sheet after marking has a better performance. The material belt 700 includes the belt body 720 and the plurality of shielding members 710. The plurality of shielding members 710 are arranged on the belt body 720, so that the material belt 700 can be unwound conveniently by the unwinding mechanism 110. The posting member 120 can post the material belt 700 on the base material 600 when the unwinding mechanism 110 unwinds the material belt 700. The first rewinding mechanism 130 can rewind the belt body 720, so that the shielding member 710 posted on the base material 600 is separated from the belt body 720. In this way, the shielding member 710 can be automatically posted to the marking area, which provides the higher posting efficiency and the higher automation degree.

The plurality of shielding members 710 are connected to the connector 730, and the plurality of shielding members 710 can be detached from the base material 600 through that the second rewinding mechanism 310 rewinds the connector 730, so that the efficiency of detaching the shielding members 710 is higher and the cost is low. The roller pressing mechanism 500 is provided, which is convenient for compacting the paint coated on the base material 600. The roller pressing mechanism is 500 arranged upstream of the stripping mechanism 300, so that the shielding member 710 is detached by the stripping mechanism 300 after the roller pressing mechanism 500 compacts the paint. Since the coating is compacted, it can avoid the stripping mechanism 300 from rubbing the paint away from the base material 600 when detaching the shielding member 710. Additionally, the paint is rolled and pressed before detaching the shielding member 710. Since the shielding member 710 still occupies the marking area, it can prevent the paint from rolling and pressing into the marking area.

The marking device 10 attaches the shielding member 710 to the marking area on the base material 600 before coating, and then detaches the shielding member 710 from the base material 600 after rolling and pressing, so as to form the score, which optimizes the process procedure and improves the efficiency and the quality of marking, and at the same time solves the problem of the heat-affected zone of the marking, thereby improving the overall safety of the battery.

It should be noted that the plurality of embodiments provided in the present disclosure may be combined with each other as long as without contradiction or conflict.

Finally, it should be noted that the above embodiments are only used to illustrate the technical solutions of the present disclosure, and are not intended to be a limitation thereof. Notwithstanding the detailed description of the present disclosure is made referring to the foregoing embodiments, those of ordinary skill in the art shall understand, who can still modify the technical solutions recorded in the foregoing embodiments, or replace partial or all technical features with equivalent ones; and these modifications or replacements do not separate the essence of the corresponding technical solutions from the scope of the technical solutions of the embodiments of the present disclosure, which shall be all covered in the scope of the claims and specifications of the present disclosure. In particular, each technical feature referred to in the various embodiments may be combined in any method as long as without structure conflicts. The present disclosure is not limited to the particular embodiments disclosed in the text, but includes all technical solutions falling within the scope of the claims.

## Claims

1. A marking device, comprising:
an attachment mechanism, configured to attach shielding members to a marking area of a base material;
a coating mechanism, arranged downstream of the attachment mechanism along a conveying direction of the base material, wherein the coating mechanism is configured to coat the base material; and
a stripping mechanism, arranged downstream of the coating mechanism along the conveying direction, wherein the stripping mechanism is configured to detach the shielding members from the base material to form scores on the marking area.

2. The marking device according to claim 1, wherein the attachment mechanism comprises:
an unwinding mechanism, configured to unwind a material belt, wherein the material belt comprises a belt body and the plurality of shielding members, wherein the plurality of shielding members are arranged on the belt body at intervals;
a posting member, configured to post the material belt on the base material, so that the shielding members are posted on the marking area; and
a first rewinding mechanism, configured to rewind the belt body and separate the shielding members from the belt body.

3. The marking device according to claim 2, wherein the posting member is a posting roller, and the posting roller is configured to roll and press the material belt to the base material.

4. The marking device according to claim 3, wherein the attachment mechanism comprises a driving mechanism, wherein the driving mechanism is connected to the posting roller, and the base material is attached to the posting roller to convey the base material.

5. The marking device according to any one of claims 1-4, wherein the marking device comprises:
two attachment mechanisms, wherein the two attachment mechanisms are separately located on two sides of the base material in a thickness direction; and
two coating mechanisms, wherein the two coating mechanisms are separately located on the two sides in the thickness direction.

6. The marking device according to claim 5, wherein the two attachment mechanisms are staggered along the thickness direction.

7. The marking device according to any one of claims 1-6, wherein the marking device further comprises:
supporting members, being in one-to-one correspondence with attachment mechanisms, wherein the supporting members and the attachment mechanisms are arranged oppositely on two sides of the base material along a thickness direction of the base material; and the supporting members are configured to support the base material.

8. The marking device according to claim 5, wherein the two attachment mechanisms are arranged oppositely along the thickness direction.

9. The marking device according to any one of claims 1-8, wherein the shielding members are provided with an adhesive layer, and the attachment mechanism is configured to attach the shielding members to the marking area of the base material.

10. The marking device according to any one of claims 2-4, wherein the material belt comprises a connector, and the connector connects the plurality of shielding members; and
the stripping mechanism comprises a second rewinding mechanism, wherein the second rewinding mechanism is configured to rewind the connector, so that the shielding members are detached from the base material.

11. The marking device according to claim 10, wherein the posting member is configured to post the connector on at least one side of the base material in a width direction.

12. The marking device according to any one of claims 1-11, wherein the marking device comprises:
a roller pressing mechanism, arranged downstream of the coating mechanism along the conveying direction, wherein the roller pressing mechanism is configured to roll and press the base material.

13. The marking device according to claim 12, wherein the roller pressing mechanism is arranged upstream of the stripping mechanism.

14. A lamination manufacturing system, wherein the lamination manufacturing system comprises the marking device according to any one of claims 1-13.
